# EUROPEAN PATENT APPLICATION

(11) **EP 2 141 933 A1**
(43) Date of publication of application: **06.01.2010**
(21) Application number: 08159469.9
(22) Date of filing: 02.07.2008
(51) Int. Cl.: H04Q 1/14

(54) **Switch matrix**

(71) Applicant: Nordia Innovation AB, 103 90 Stockholm (SE)
(72) Inventor: Hedberg, Mats, 136 72 Haninge (SE)
(74) Representative: Börlin, Maria

(57) **Abstract**

A cross-connect device (100) for electrically cross-connecting any line in a set of input lines (101) to any line in a set of output lines (103). The device (100) comprises a plurality of contact pads (105) to which the input and output lines (101, 103) are connected and a linearly movable contact block (109). Said contact block (109) is arranged to connect the contact pads (105) to each other for connecting an input line (101) to an output line (103) and drive means are arranged for moving the contact block (109). The cross-connect device (100) further comprises a capacitive positioning system, by means of which the position of the movable contact block (109) and the drive means (115) can be determined.

## Description

### TECHNICAL FIELD

The present invention relates generally to automated switch matrices used in e.g. telecommunication networks for performing cross-connects. More particularly the invention relates to a cross-connect device incorporating a positioning system.

### BACKGROUND ART

A typical central office of a telecommunication network houses a telephone exchange where subscriber home and business lines are connected to the network on what is often called a local loop. Many of these connections to residential subscribers are typically made using a pair of copper wires, also referred to as a twisted pair, that collectively form a large copper network operated by a landline telecommunications provider. Within the central office the line connections between the exchange side and the subscriber side are terminated at a main distribution frame (MDF), which is typically the point where cross-connections are made between the subscriber lines and the exchange lines for connecting subscribers to telecommunication services.

Traditionally the management of the copper infrastructure was a highly labor intensive process, which resulted in one of the most significant costs faced by telecommunication providers. Connecting subscribers to services meant that cross-connects were made manually from the central office by dispatching technicians to the MDF site to install cross-connects using jumper wires.

As a result, service providers have long desired to reduce the amount of labor required to manage the copper infrastructure by automating the process of making, removing, or modifying cross-connects for line pairs in the MDF. In recent years a number of automated cross-connect solutions using automated switch matrices have been developed and marketed. Many of these products implement an automated switching matrix using electromechanical relays or robotic technologies to make the cross-connects. Each of the methods has various disadvantages relating to them. For example, a major drawback with the use of electromechanical relays is that their physical size limits the capacity of the switch matrix since only a finite number can fit on the switch matrix, thereby limiting the number of lines the switch matrix can handle. Robotic solutions tend to exhibit reliability and maintenance issues over the long term, which tends to increase costs to the service provider.

One type of switch matrix technology that mitigates the above disadvantages is a switch matrix that employs a plurality of sliding contact blocks having spring loaded electrically conductive elements, which mechanically engage a plurality of electrically conductive contacts for completing cross-connects.

An example of such a switch matrix is disclosed in the document US4817134, which describes a mechanically based automated switch matrix for cross-connecting a set of line pairs within a single plane. The cross-connects are made using movable shorting springs to electrically connect a first set of line pairs to a second set of perpendicular oriented line pairs. The contact elements are made of an electrically conductive metal and are moved into position by rotating positioning screws by two stepper motors operating in combination. The first stepper motor operates to turn a motor positioning screw in order to move the second stepper motor to a desired position in front of the selected shorting spring positioning screw. The second stepper motor operates to move the shorting springs to produce a short circuit across a set of contacts that cross-connect the line pair. A disadvantage of the switch matrix described is the limited number of line pairs it can cross-connect, and the lack of scalability to handle growth in the number of lines in the central office. Since the capacity of the switch matrix is designed in from the start it is difficult to add switching capacity as conditions dictate in high-growth markets.

Another drawback with the switch matrix of US4817134 is that it fails to provide a way to determine the position of the shorting elements. Although it is theoretically possible to calculate position of the shorting elements by counting the stepper motor pulses, the position information would be lost if there is a power outage or if loss of synchronization occurs if the gears slip, for example. Recovering the position information would require moving the contact elements to a reset position thereby causing highly undesirable service interruptions for the existing connections. Without precise position information on the shorting elements it is not possible to perform maintenance functions such as cleaning the contact points by periodically moving the shorting elements slightly back and forth without breaking existing connections. Such reciprocating action also enables the drive elements to be "exercised" during long periods of inactivity, which can increase the service life of the device.

The publication W02005071979 discloses a switch matrix board which uses contact pads for the position detection of a sliding contact sledge. For this purpose, in addition to main contact springs used for the cross-connects, the contact sledge includes two sets of detector contact springs. All contact springs move together, each making contact with a respective column of contact pads on the board. The two detector contact springs work in combination to detect whether the main contact springs are positioned on or off the contact main pads. With such a position detection it is possible to determine roughly where the contact sledge is on the switch matrix at all times. However, this position detection manner suffers from a number of drawbacks. The detection is not very precise and the contact sledge must be provided with additional contact springs. Additionally, the position detection relies on rather unreliable electrical contact between the detector contact springs and the contact pads, which furthermore are subject to mechanical wear. Also, the construction is relatively complex.

In view of the foregoing, it would be desirable to provide an automated switch matrix with an improved positioning system that is accurate, reliable, economical and overcomes the disadvantages of the prior art.

### SUMMARY OF THE INVENTION

The object of the present invention to provide a switch matrix that is furnished with an accurate, reliable and durable positioning system.

The object has been obtained by a cross-connect device for electrically cross-connecting any line in a set of input lines to any line in a set of output lines. Said device comprises a plurality of contact pads to which respective input and output lines are to be connected, a linearly movable contact block and drive means for moving the same. The contact block is arranged to connect the contact pads to each other for connecting an input line to an output line.

The device further comprises a capacitive positioning system with a capacitor element which is carried by the contact block, and a capacitor array which is arranged in fixed relation to the contact pads.

Said capacitor element is arranged adjacent the capacitor array so that the capacitive positioning system can determine the contact block position in relation to the contact pads.

In this way, a highly accurate positioning system is achieved. The system is contactless and thus very durable. Further, the positioning can be performed without moving the contact block.

The cross-connect device may include a number of groups of contact pads, each group comprising a plurality of contact pads which arranged side by side and a corresponding number of contact blocks with capacitor elements. In this way, the cross connect device can handle a plurality of input and output lines. The capacitive positioning system is adapted in correspondence therewith in that the capacitor array extends over the area where the capacitor elements move.

The capacitive positioning system may comprise a control device that applies electrical stimulation to the capacitor array and measures the corresponding response on the capacitor element.

The capacitor array may comprise a number of capacitive positioning pads and a pick-up rail, which are arranged along the contact pads. Then, the capacitor element cooperates with the capacitive positioning pads and the pick-up rail so that electrical stimulation can be forwarded from the capacitive positioning pads, through the capacitor element and to the pick-up rail.

The cross-connect device may further comprise electrical lines which connect the capacitive positioning pads to a control device, such that the capacitive positioning pads can function as coarse position capacitive positioning pads for determining a coarse position of the contact block. Said coarse position capacitive positioning pads are linearly distributed at even intervals along the pick-up rail. The capacitive positioning pads can be of equal width and individually connected to a control device by means of the electrical lines, so that the position of the contact block can be coarsely determined by sending individual electrical stimulation to the pads. Equal width of the coarse position capacitive positioning pads facilitates the manufacture of the capacitor array.

Alternatively, the width of the coarse position capacitive positioning pads may differ along the pick-up rail. The capacitive positioning pads are then divided into a first coarse positioning group and a second coarse positioning group, and the pads within each group are connected to the control device such that the groups can be electrically stimulated independently from each other. This arrangement which facilitates the manufacture of the capacitor array in that less electrical lines are needed.

The capacitive positioning pads may be connected to the control device, such that the capacitive positioning pads additionally can function as fine position capacitive positioning pads for determining a fine position of the contact block, wherein the capacitive positioning pads are divided into four fine positioning groups. The pads within each group are connected to the control device such that the groups can be electrically stimulated independently from each other. In this connection, the positioning pads of one group are arranged so as to alternate with the positioning pads of another group, and the positioning pads communicate with the capacitor element in a manner such that offset overlapping capacitive contact areas are at hand all along the pick-up rail. This arrangement allows highly accurate capacitor element positioning.

When the coarse position of the contact block is determined, the positioning system knows which one of the contact pad that the contact block may be connected to. When the fine position of the contact block is determined, the positioning system knows if the contact block is connected to the contact pad or not.

The capacitive positioning system can also be used for determining the position of the drive means. This object has been obtained by a cross-connect device for electrically cross-connecting any line in a set of input lines to any line in a set of output lines, wherein a plurality of linearly movable contact blocks are arranged to connect an input line to an output line. A linearly movable drive means is provided for moving the contact blocks, whereby the drive means can be moved to a position adjacent a respective contact block and move the respective contact block.

The capacitive positioning system comprises a capacitor element which is carried by the drive means, and a capacitor array which is arranged in fixed relation to the contact blocks. The capacitor element is arranged adjacent the capacitor array so that the capacitive positioning system can determine drive means position in relation to the contact blocks.

Further advantages and forms of the invention will become apparent from the detailed description below.

### BRIEF DESCRIPTION OF THE FIGURES

The invention will now be described in greater detail with reference to the enclosed figures, where
- Fig 1: is a schematic illustration of a switch matrix according to the present invention,
- Fig 2: shows an enlarged cross-section through the switch matrix of figure 1,
- Fig 3-7: illustrate the capacitive positioning principle,

- Fig 8: illustrates one example of a capacitor array for a plurality of contact blocks,
- Fig 9: shows an enlargement of a part of the capacitor array of figure 8, and
- Fig 10-12: illustrates alternative capacitor arrays.

Neither the figures nor the detailed description below shall limit the scope of the present invention. Throughout the drawings, the same reference numerals have been used for the same or corresponding components.

### DETAILED DESCRIPTION

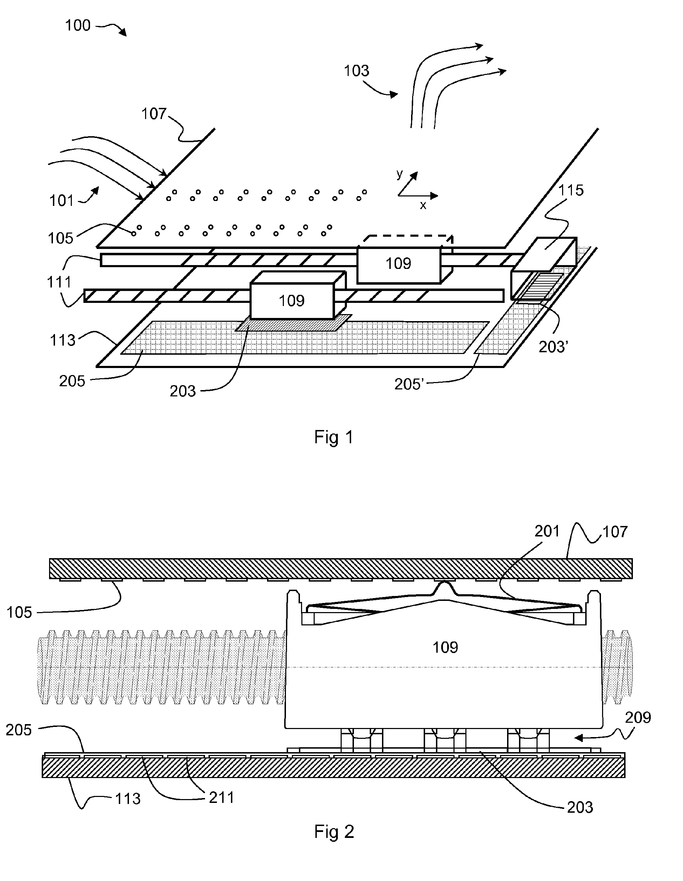

Figure 1 depicts an exemplary switch matrix board 100 using mechanical engagement for contacts that can be used in an automated cross-connect system. The switch matrix board 100 is configured for cross-connecting a number of input line pairs 101 to a number of output line pairs 103 in a so-called any-to-any configuration making it possible to connect any line in a set of input lines 101 to any line in a set of output lines 103. Each of the three arrows that illustrate input and output lines 101, 103, respectively, thus comprises one pair of lines.

The cross-connect device 100 is capable of performing automated cross-connects, for example, subscriber line pair to a port on the exchange, thus enabling any-to-any connection of any of the subscriber line pair to any port on the exchange. A typical telephone exchange utilizes a plurality of interconnected modular cross-connect boards 100 that are electrically coupled by inserting them into to the connector blocks on both the line and the exchange sides.

The plurality of switch matrices 100 is remotely controllable by the central office. The switch matrix enables cross-connects to be made between the lines in 101 and the lines out 103 of the matrix 100.

As can be seen in figure 1, each switch matrix board 100 comprises a plurality of electrically conducting contact pads 105 that are formed into a first printed circuit board (PCB) 107. The contact pads 105 are arranged into a plurality of longitudinal contact trains (extending in an x-direction) and an electrical connection between them is made when a pair of contact springs 201 (see figure 2) of a contact block 109 or sledge 109 mechanically engages with the contact pads 105. The contact pads 105 are connected through the first PCB 107 to internal conductor layers that interconnect with other contact pads 105. Each of the contact blocks 109 can be displaced longitudinally along the axis of positioning screws 111 by rotating them by means of a drive means 115. Rotating the positioning screw 111 in the opposite direction will reverse the direction of contact block 109. For more information on the contact springs 201 of the contact block 109, and also the configuration of the first printed circuit board 107 to obtain any-to-any connection, reference is made to W02005071979.

The switch matrix board 100 further comprises a second PCB 113, which is arranged in parallel with the first PCB 107. Whereas the first PCB 107, together with the contact blocks 109, handle the cross-connection of the matrix board 100, the second PCB 113, also together with the contact blocks 109, handle the position detection of the matrix board 100.

As is schematically illustrated in figures 1 and 2, the second PCB 113 is furnished with a so-called capacitor array 205, which will be described in detail below. The capacitor array 205 interacts with the contact blocks 109. Said array 205 comprises a number of so-called capacitive positioning pads generally denoted 211.

The contact blocks 109 are elongated bodies comprising contact springs 201 for making contact between pairs of contact pads 105. The contact block body 109 contains a threaded hole into which the positioning screw 111 turns to drive the contact block 109 along the PCB's 107, 113 to make contact with the appropriate contacts 105 of the switch matrix board 100. The positioning screw 111 is connected to and driven by the drive means 115.

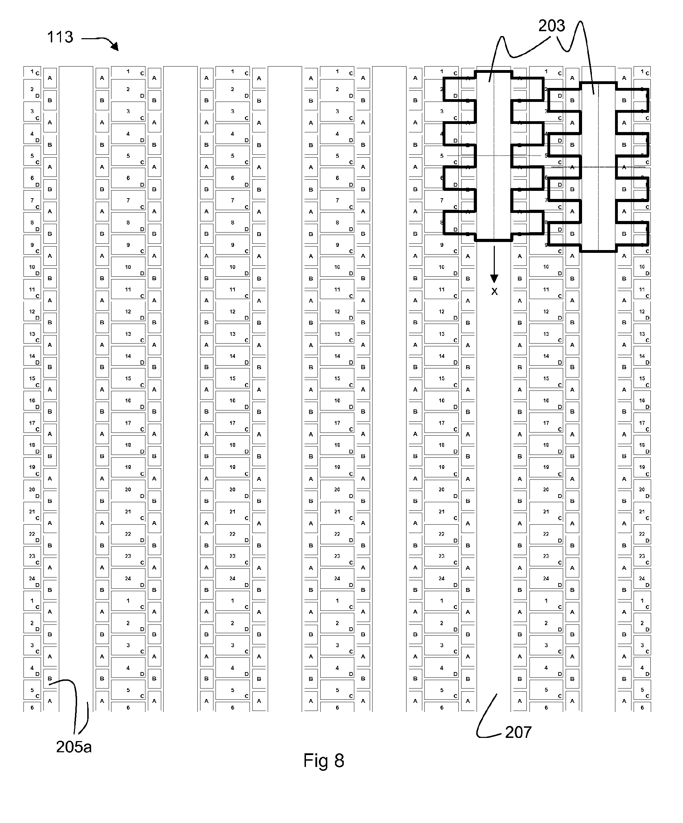

A plurality of motor drivable contact blocks 109 are included (see figure 1 and 8) on the switch matrix boards 100 that enable automation of cross-connection of the line pairs 101, 103 serviced by the switch matrix 100. Each contact block 109 is arranged on a positioning screw 111 and the positioning screws are arranged paralelly to each other between the PCB's 107, 113. The mechanical nature of the switching action of the matrix board 100 advantageously provides high operating reliability under a wide range of temperatures. The cross-connects remain intact during power failure. Further, relatively high voltages, i.e. higher levels than those of communication signals, are endured.

The drive means 115 is linearly movable in a direction (y-direction) perpendicular to the positioning screws 111 (x-direction). In this way, the drive means 115 can be moved to a positioning screw 111 and apply a torque to the positioning screw 111, so as to move the contact block 109 forward or backward. By way of example, the drive means 15 may be carried by a positioning screw in analogy with the contact blocks 109. The drive means 115 may comprise an electric motor which can turn the positioning screws 111 of the contact blocks 109 by means of gearing (not shown). As will be appreciated, there are several conceivable ways to move the drive means 115, and also to rotate the positioning screws 111 by means of the drive means 115. Details on these matters are not described here, since the present invention primarily relates to the position detection of the drive means 115 and the contact blocks 109.

As is shown in figures 1 and 2, the contact block 109 carries a capacitor element 203. With respect to the contact springs 201, the capacitor element 203 is arranged on the opposite side of the contact block 109. The contact springs 201 of the block 109 cooperate with the contact pads 105 of the first PCB 107 and the capacitor element 203 of the block 109 cooperates with the capacitor array 205 of the second PCB 113. Figure 2 further illustrates mounting means 209 by means of which the capacitor element 203 is attached to the contact block 109. The mounting means 209 may be resilient so as to bias the capacitor element 203 towards the second PCB 113.

A second capacitor array 205' is arranged on the second PCB 113. This array 205' is adapted to cooperate with a second capacitor element 203', which is carried by the drive means 115. In figure 1, the drive means 115 are schematically illustrated as semi-transparent, so that the second capacitor element 203' is clearly visible. The second capacitor array 205' and the second capacitor element 203' are provided for the position detection of the drive means 115.

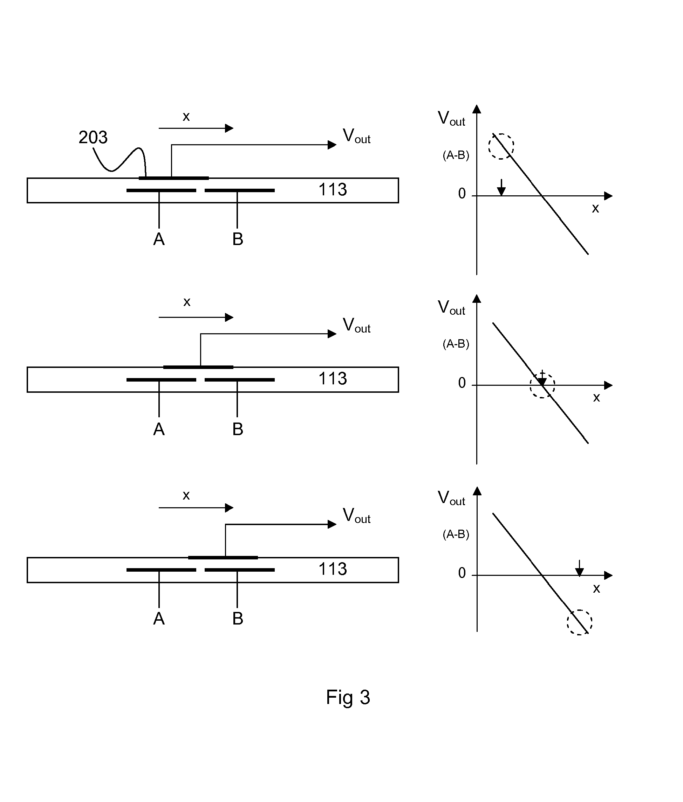

The present capacitive positioning principle will now be described with reference to figures 3 to 7. In general, capacitive positioning sensing is galvanically contactless. It is based on relation measurements between tunable capacitances.

In figure 3, the PCB substrate 113 contains the lower halves A, B of a respective capacitor, the capacitive positioning pads A, B (generally denoted 211 in figure 2), and the movable capacitor element 203 forms the upper half of the capacitors. Said capacitive positioning pads A, B are formed by conductive layers, e.g. of metal, which are embedded in the PCB substrate 113. Alternatively, the pads may be formed on the surface of the PCB 113, then the capacitor element 203 may be provided with an electrically insulating layer. The capacitive coupling will be dependent of position. The figure demonstrates three different positions, where upper has largest coupling to pad A, the mid has symmetrical coupling between pad A and pad B and the lower has most coupling to pad B. As is illustrated, the capacitor element 203 and the capacitive positioning pads A, B are not in galvanic contact with each other. The differing capacitive coupling is illustrated by means of the three diagrams on the right hand side of the PCB's 113.

The modulation of pad A and pad B in figure 3 will take place at different times, and the two different measuring values will be compared with each other. Modulation means sending a voltage pulse to a pad A and B one at a time and measuring the voltage response (Vₒᵤₜ) at capacitor element 203. The relation of the voltage responses will be in proportion to the position of the capacitor element 203.

Alternatively, instead of a voltage pulse, the electrical stimulation of the pads A, B can be in the form of a tone. Two tones, which are out of phase, are supplied to pad A and pad B respectively. The sum signal, or the electrical stimulation response, is measured at the capacitor element 203. By comparing the signal intensity in the different phases, or just comparing the phase of the sum signal in relation to the input signals, the position of the capacitor element 203 can be determined. In accordance with this modulation, the electrical stimulation and the response measurement takes place simultaneously for both pads A, B. The tones may be in the form of a pulse train, which is less complicated to produce.

Both modulation methods, i.e. using a pulse or a tone, are conceivable. However, for means of simplicity, only the voltage pulse modulation is referred to in the following.

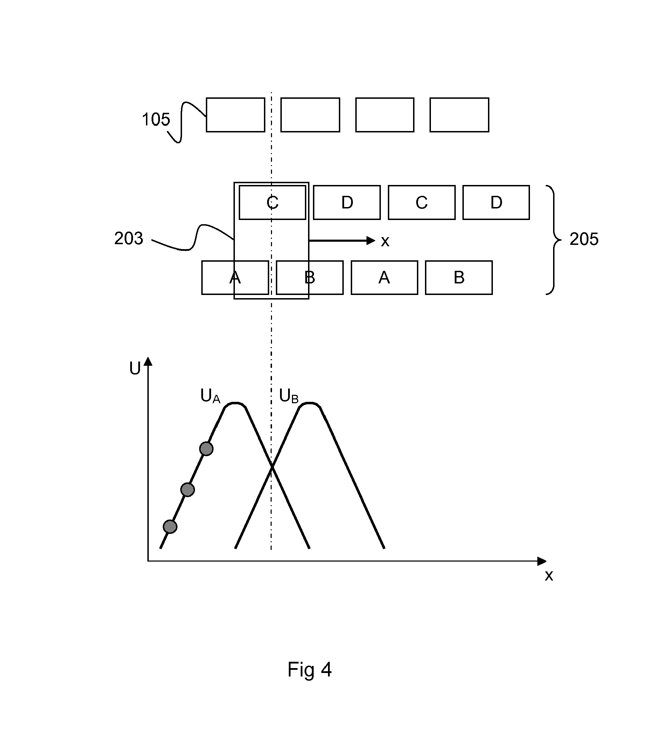

In figure 4, a first plurality of alternately arranged adjacent capacitive positioning pads A, B is shown. A moving capacitor element 203 is arranged to travel in close proximity to the pads A, B. The pads A, B and the capacitor element 203 are flat and arranged in parallel at a short distance from each other. The capacitor element 203 and well as the pads A, B are connected to a control device, so that a voltage can be supplied to the pads A, B, and a corresponding voltage response can be measured on the capacitor element 203. The pads A, B are positioned side by side close to each other. However, in order to make sure that the pads A, B are electrically isolated from each other, there is a lateral clearance between the pads A, B.

The diagram of figure 4 illustrates the voltage of the capacitor element 203 in response to a voltage applied to the pads A and B. The covered area of a pad A, B is proportional to the coupling capacitance between the pad A, B and the capacitor element 203. The larger the capacitance the larger the voltage. The pads A and B are in fixed time intervals alternately supplied with voltage pulses, as illustrated by the three dots on the left hand curve U_{A}. As the capacitor element 203 moves along the pad A (x-direction), the voltage of the capacitor element 203 varies. When the capacitor element 203 is arranged just in front of, or centrally with respect to, pad A, the measured voltage output of the capacitor element reaches a maximum value. The right hand curve U_{B} shows the corresponding voltage for pad B. The two curves U_{A} and U_{B} are identical, but they are offset in correspondence with the distance between the centers of pads A and B.

Upon position detection, the voltage response curve U_{B} is subtracted from U_{A}. The gradients of the resulting curve U_{A} - U_{B} are steep which increases the positioning accuracy. Tests have shown that the most accurate detection is achieved at the areas (x-direction) where the response curves U_{A}, U_{B} have straight slopes. A study of figure 4 reveals that the straight slopes of the response curves U_{A}, U_{B} coincide with the spacing between the contact pads 105. The contact pads 105 centers coincide with the centers of the positioning pads A, B. Consequently, positioning pads A, B are suitable for the position detection of the contact element 203 in the clearances between the contact pads 105.

Figure 4 also shows a second plurality of alternately arranged adjacent capacitive positioning pads C, D. The positioning pads C and D are offset with respect to the pads A and B by a distance which corresponds to half the positioning pad center to center distance. Said center to center distance can be referred to as the positioning pad pitch. All pads A, B, C and D are of equal length. The positioning pads A, B or A, B, C, D and their placement is referred to as a capacitor array 205.

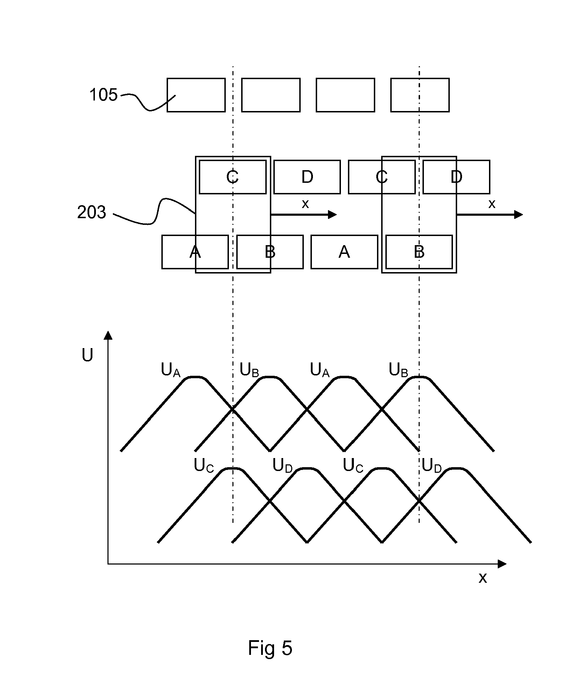

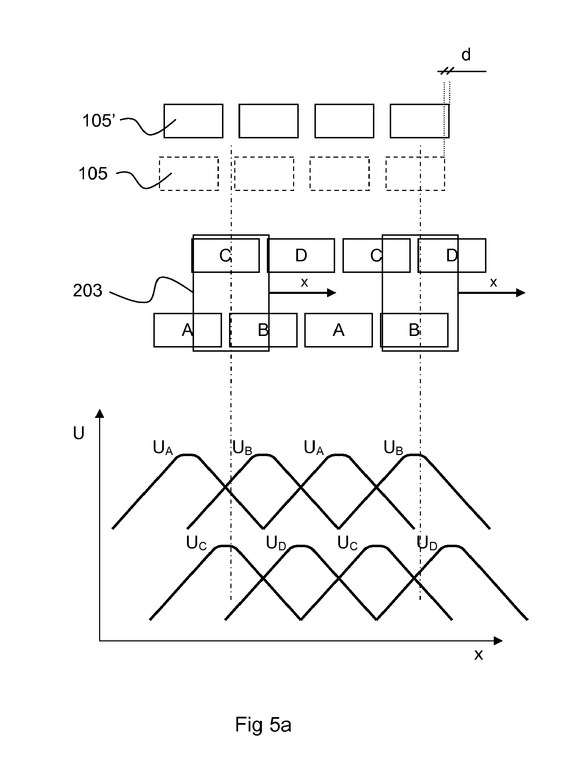

Figure 5 essentially corresponds to figure 4 and illustrates the function of the second plurality of capacitive positioning pads C, D. The contact element 203 is illustrated in two positions. Bearing in mind that straight voltage response slopes U_{A}, U_{B}, U_{C}, U_{D} are preferred for position determination, it is clear from the figure that pads C and D are suitable for the position detection of the contact element 203 in the areas on the contact pads 105. The voltage response curve U_{D} is subtracted from U_{C} for increased positioning accuracy.

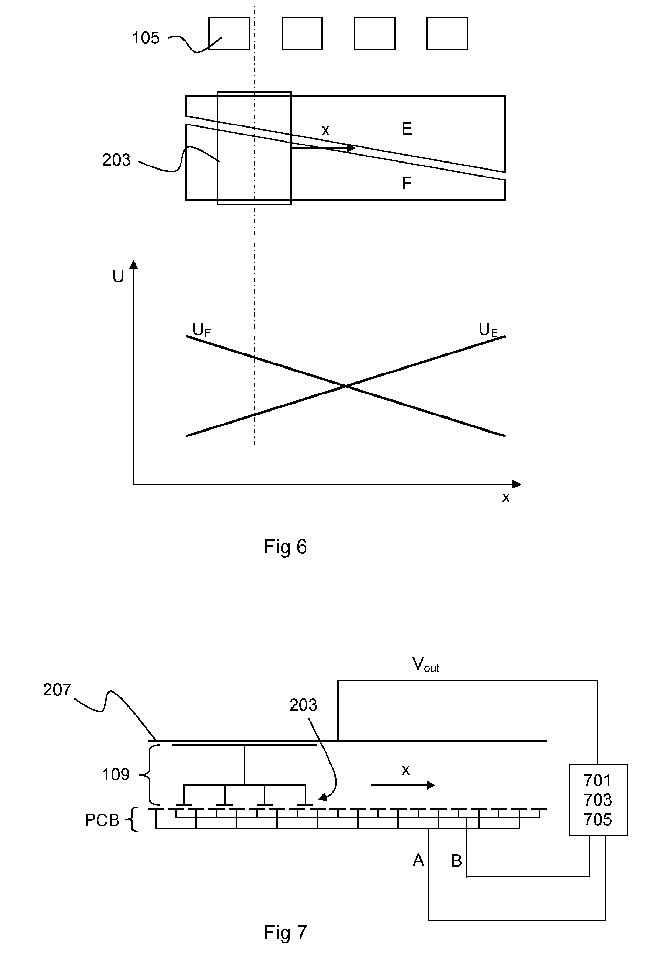

By means of the arrangement of the capacitive positioning pads A, B, C and D, appropriate straight voltage curve slopes are at hand all along the length of the contact pads 105 (x-direction). A first group A, B of capacitive positioning pads is arranged alternately and a second group C, D is also arranged alternately and offset in relation to the first group. The first A, B and second C, D groups thus overlap each other along the length of the contact pads 105. Every second pad, i.e. all the A pads and all the B pads, respectively, of the first group is connected to a control device (see figure 7). Correspondingly, every second pad of the second group is also connected to a control device. Thus every second A pad is collectively connected to the control device, and so on. The control device makes use of the voltage response curves U_{A}, U_{B}, U_{C} and U_{D} of the respective pads for determining the fine position of the capacitor element 203. The knowledge of the fine position is, in accordance with the present invention, used to conclude whether the contact springs 201 of the block 109 are in contact with the contact pads 105 or not. Consequently, the use of two sets of capacitive contact pads A, B and C, D, respectively, ensures accurate position detection both on and off the contact pads 105.

Figure 5a differs from figure 5 in that the contact pads 105' are offset by a distance d from the intended position (illustrated in dashed lines) of the contact pads. In figure 5, the voltage responses from pads A and B were equal when the capacitor element 203 was located right in-between the contact pads 105. Further, the voltage responses from pads C and D were equal when the capacitor element 203 was located centrally on the contact pads 105. With the offset of the contact pads 105' illustrated in figure 5a, neither the voltage responses U_{A} and U_{B} nor Uc and U_{D} are equal in these situations. Rather, as can be seen, U_{B} is larger than U_{A} and U_{D} is larger than U_{C}. By proper calibration, the capacitive positioning pads A, B, C, D can however be used for determining the position of the capacitor element 203 with respect to the offset contact pads 105'. Here, calibration means consideration of the fact that equal voltage responses from pads A and B does not imply that the capacitor element 203 is located right in-between the contact pads 105', and so on. If the contact pad pitch, i.e. the contact pad center to center distance, is equal to the positioning pad pitch, the same calibration is valid along the positioning length.

Since the arrangement of the capacitive positioning pads A, B, C and D ensures accurate positioning all along the length of the contact pads, neither the number of contact pads nor the contact pad pitch must correspond to the number or pitch of the positioning pads.

In figure 5a, the contact pads 105, 105' are illustrated above each other, in the direction perpendicular to the x-direction, for illustrative purposes only. It is the offset in the x-direction that is to be compensated for by calibration.

The control device is furnished with a distribution means which supplies voltage pulses to the capacitive positioning pads. In this example, all pads bearing the same letter, e.g. all A-pads or all B-pads, are furnished with a voltage pulse at the same time. Thus, pads bearing the same letter need not be individually connected to the distribution means. Instead, all pads bearing the same letter can be collectively connected to the distribution means, which simplifies the construction. The control device further comprises a voltage measuring means, which is configured to register the voltage on the capacitor element 203 when the voltage pulse is supplied. An appropriate timing is required for the control device to be able to combine a voltage pulse with the correct capacitive positioning pad.

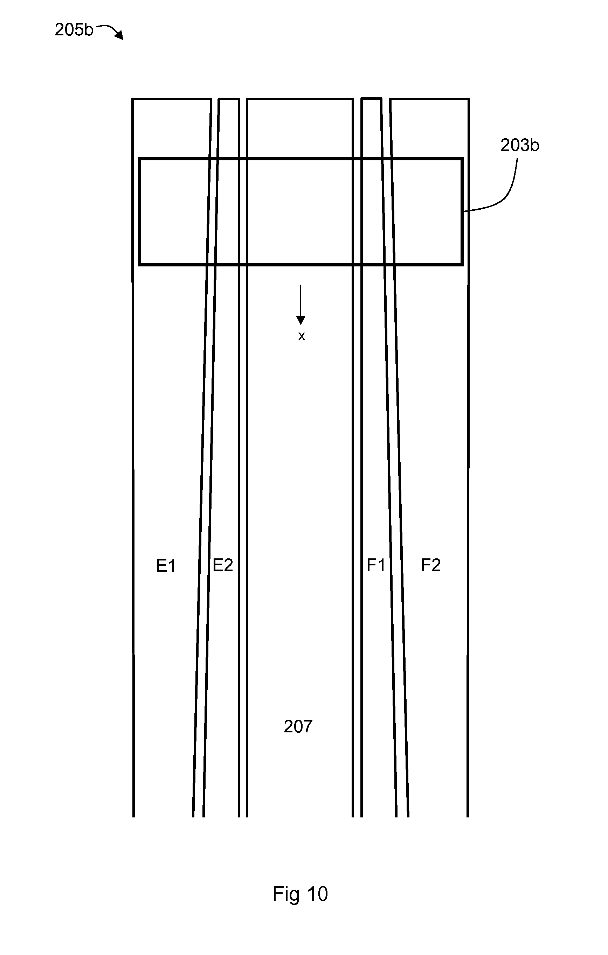

Figure 6 discloses an alternative positioning pad arrangement. Only two positioning pads E, F are used for the capacitive positioning of the capacitor element 203. The pads E, F are elongated and extend all along the length of the contact pads 105 (x-direction). As can bee seen, the width of pad E increases continuously in the x-direction, whereas the width of pad F decreases in the same manner. The sum of the widths of the two tapering pads E, F is constant along the pad extension. The tapering capacitive positioning pads E, F are formed as opposing right-angled triangles (see also the arrays of figures 10-12).

Figure 6 also illustrates the contact pads 105 and a diagram that shows the voltage of the capacitor element 203 in response to a voltage applied to the pads E and F. By means of the voltage ratio between the curves U_{E} and U_{F}, the position of the element 203 can be determined, basically as has been described with reference to figure 3. As can be understood and seen, the gradients of these curves U_{E}, U_{F} are lower than the gradients of the curves U_{A}, U_{B}, U_{C}, U_{D} of figure 5. Thus, the positioning accuracy obtained by the tapering pad pair E and F is not as good as the positioning accuracy obtained by the pluralities A, B and C, D of positioning pads of figure 5.

Figure 7 is a principle sketch of a PCB, corresponding to the second PCB 113 of figures 1 and 2, with a capacitor array of capacitive positioning pads A and B. All A pads are connected together and all B pads are connected together. Above the pads A, B, a capacitor element 203 comprising four capacitor sections is shown. The lateral distance between each section is equal to the distance between the respective A or B pads. This arrangement increases the capacitive surface, and thereby be capacitive coupling, made up by the capacitor element 203 and the pads A, B. The pads A, B communicate with the capacitor sections of the capacitor element 203 in the manner described with reference to figures 3 and 4.

A contact block 109 is also illustrated in figure 7. The contact block 109 carries the capacitor element 203 with the capacitor sections. The block 109 is further furnished with means for closing the measuring circuit. Here, a collecting capacitive surface is illustrated, to which the four capacitor sections are unanimously connected. The collecting surface communicates with a so-called pick-up rail 207, which e.g. can be arranged on the PCB.

The position detection process starts with the application of a voltage pulse on the A or B pads, as has been described. The pulse is transmitted to the four capacitor sections of the capacitor element 203 by capacitive coupling. The four voltage pulses received by the capacitor element 203 are added together and led from the collecting capacitive surface to the pick-up rail 207, also by means of capacitive coupling.

Figure 7 finally also indicates the control device 701 comprising the measuring means 703 and the voltage distribution means 705 for carrying out the positioning. The distribution means 705 intermittently and alternately sends voltage pulses to the capacitive positioning pads A, B. The pulses pass through the arrangement 109, 207 as has been described, and end up in the measuring means 703 of the control device 701. Alternatively, the pick-up rail 207 and the collecting capacitive surface of the capacitor element 203 can be replaced by a cable (not shown) connecting the capacitor element 203 directly to the control device 701.

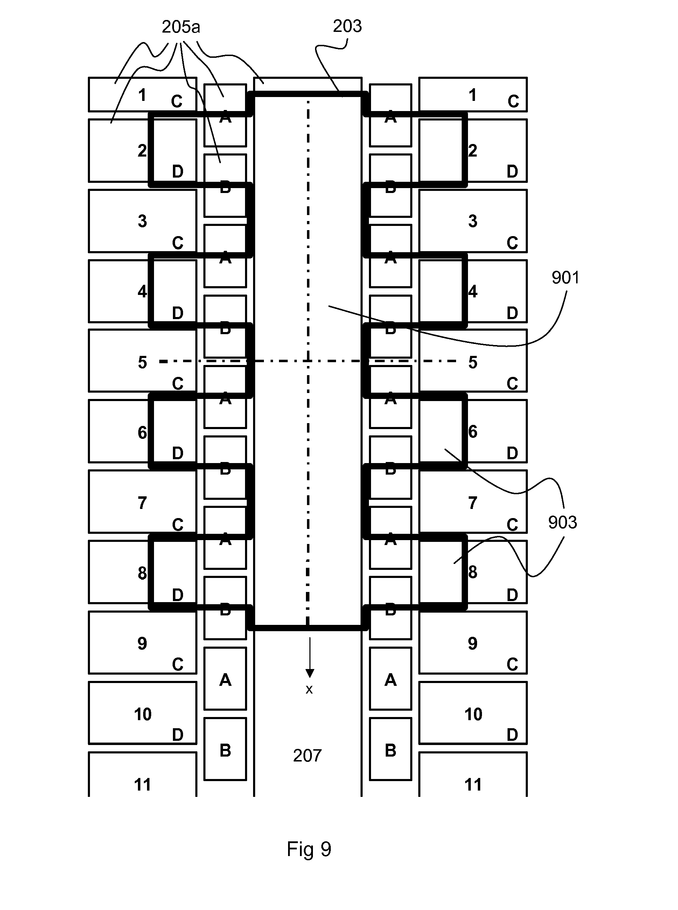

Bearing the above described principle of the capacitive positioning in mind, reference is now made to figures 8 and 9. The capacitor array 205a shown here essentially corresponds to the one described with reference to figure 5. However, in the capacitor array 205a, several sets (see figure 8) of pluralities of capacitive positioning pads A, B, C, D are arranged next to each other. Capacitor elements 203, each carried by a respective contact block 109 (not shown in figure 8), cooperate with each set, as is also illustrated in figure 1 (figure 1 illustrates two contact blocks 109, but the capacitor array 205 is only shown under one of the blocks 109).

The capacitor array 205a comprises pick-up rails 207 between each set of capacitive positioning pads A, B, C, D. Each pick-up rail 207 cooperates with a capacitor element 203 of a contact block 109 for measurement of the voltage pulses supplied to the pads A, B, C, D, as has been described with reference to figure 7.

The sets of capacitive positioning pads A, B, C, D are arranged as follows. On both sides, i.e. the left and the right hand sides, of each pick-up rail 207, an inner (first) plurality or groups of pads A, B are arranged (compare figure 5). The inner pads A, B are alternately arranged along the pick-up rail 207. Outside, as seen from the pick-up rail 207, said inner pad plurality A, B, an outer (second) plurality of pads C, D is alternately placed. The outer pads C, D are offset (in the x-direction) with respect to the inner pads A, B in an overlapping manner (compare figure 5). The center of each outer pad C, D coincides with the center of the clearance between the inner pads A, B. In this manner, straight voltage response curve slopes are achieved all along the distance where the position is to be determined.

Alternative designs are conceivable. The inner A, B and outer C, D pads can change place. If less accurate positioning is sufficient, the inner capacitive contact pads A, B can be omitted. In figure 8, the respective groups of inner pads A, B and outer pads C, D comprise pads on both sides, i.e. the left and right hand side, of the pick-up rail 207. Instead, the groups could simply comprise pads on one side of the pick-up rail 207, see the principle of figure 3.

In figures 8 and 9, the capacitor element 203 has the shape of a main rectangle 901 with eight so-called fingers 903. Each finger 903 consists of a smaller rectangle 903 that protrudes perpendicularly out from the main rectangle. Four fingers 903 are arranged on a left and a right hand side of the main rectangle 901, respectively. The main rectangle 901 of the capacitor element is arranged over, and communicates with, a pick-up rail 207 and the fingers 903 are arranged over, and communicate with, the capacitive positioning pads A, B, C, D. A voltage pulse supplied to a capacitive positioning pad is transferred to the capacitor element finger 903 arranged over the pad. The pulse is then conducted to the capacitor element main rectangle 901, and from there to the pick-up rail 207. The pick-up rail 207 is in turn connected to the control device 701, whereby the voltage response can be measured. This corresponds to the above description of figure 7. By using several fingers 903, the positioning will be based on a mean value of several values. This reduces the risk of positioning errors due to misplaced capacitive positioning pads or other irregularities in the physical properties.

It is to be appreciated that the present shape of capacitor element 203 is not crucial for the function of the invention. In its simplest form, the capacitor element 203 is made up by a single rectangle, see figures 4-6. The only requisite is that the capacitor element 203, as is travels along the capacitor array, overlaps at least a part of each capacitor pad and a pick-up rail 207.

The eight-finger design of the capacitor element 203 ensures accurate measurement results, and thereby accurate positioning, in that several corresponding capacitive positioning pads are overlapped simultaneously. In figure 8, the capacitor element 203 cooperates with eight D-pads at the same time. Further, sixteen A-and B-pads are partly overlapped.

The capacitor array 205a and the capacitor element 203 of figure 8 are designed such that capacitive positioning pads and capacitor element fingers 903, respectively, are arranged on both sides of the main rectangle 901 of the capacitor element 203. An embodiment with pads and fingers on one side of the main rectangle is also feasible. However, such a rectangle 901 would need to be twice as long in order to obtain the same number of overlapped pads, i.e. the same accuracy.

For the understanding of the relative positioning technique used in connection with figures 8 and 9, reference is made to the description of figures 3-7. However, as is especially clear from figure 9, the outer capacitive positioning pads C, D serve an additional purpose, which here is revealed by the pad numbering 1, 2, 3 ... of the pads C, D. The capacitive positioning pads C, D / 1, 2, 3 ... are namely also used for the coarse, or absolute, positioning of the capacitor element 203. For this reason, the pads 1, 2, 3 ... are individually connected to the distribution means of the control device.

In operation, when the coarse position of the capacitor element 203 is to be determined, the distribution means 705 supply voltage pulses to the positioning pads 1, 2, 3 ... in sequence. If a capacitor element with four fingers 903 on each side is used, an initial voltage pulse is sent to the four first odd-numbered pads 1, 3, 5, 7 at the same time. Subsequently the four following pads 2, 4, 6, 8 are supplied with a voltage pulse, and so on. The procedure is repeated until the voltage response measured on the pick-up rail 207 implies that the capacitor element 203 has been located. A result indicating that the capacitor element 203 has been found is a voltage response that is lower than the preceding one. Other modulations of the coarse positioning pads 1, 2, 3 ... are conceivable. The control device 701 is now informed of where the contact block 109 is located with respect to the capacitor array 205a, and thus where the contact springs 201 are located with respect to the contact pads 105. Next, the already described fine, or relative, positioning procedure is initiated to accurately determine the position of the contact springs 201, i.e. if the contact springs 201 are on and off the contact pads 105.

In figure 10, an alternative capacitor array 205b is disclosed. The difference from figure 9 being that only two pairs of capacitive positioning pads E1, E2 and F1, F2 are used for each capacitor element 203b. This is made possible by means of a continuously changing, or tapering, width of the pads E1, E2, F1, F2 along the array 205b (x-direction). It is to be understood that the use of two capacitive positioning pads E1, E2 would suffice for the function of the invention (compare figure 6). In each pair, one of the pads E1, F2 has a width that continuously decreases whereas the width of the other pad E2, F1 continuously increases. The sum of the width of the pads in each pair is constant along the array (x-direction).

When four tapering capacitive positioning pads E1, E2, F1, F2 are used, the capacitor element 203b can have the shape of a rectangle overlapping said pads E1, E2, F1, F2 and the pick-up rail 207. The above described capacitor element 203 with four fingers 903 would not entail higher accuracy in this case.

A voltage pulse is alternately supplied to the respective pads E1, E2, F1, F2 of each pair and the voltage response is registered, in a manner which has been described. Now, the control device can determine the position of the capacitor element 203b by comparing the voltage contribution from the respective pads E1, E2, F1, F2 of each pair.

If, for example, the control device measures the voltage response of a first capacitive positioning pad E1, F2 of a pad pair E1, E2, F1, F2 to be 0.5 V, and subsequently measures the voltage of the second pad E2, F1, to be 0.5 V, the conclusion that the capacitor element 203b is located in the middle of the array (x-direction) can be drawn. If the response from the first pad E1, F2 exceeds the response from the second pad E2, F1, the capacitor element 203b is located closer to the wide end of the first capacitor element E1, F2, as shown in figure 10. The prevailing design of the respective capacitive positioning pads of a pair with respect to each other will decide the position of the capacitor element 203b for specific voltage responses.

With reference to figure 10, the outermost capacitive positioning pads E1, F2, which taper in the x-direction, can be coupled together and furnished with voltage pulses simultaneously. Then, the innermost pads E2, F2 are connected and furnished with voltage pulses in the same manner.

It is also possible to use one single capacitive positioning pad E1 together with the pick-up rail 207 and a capacitor element for the positioning. The control device then needs to know the expected minimum and maximum pad voltages, with which the control device can compare an existing pad voltage value. If for example a voltage pulse is sent to the pad E1 and the response voltage measured via the capacitor element and the pick-up rail 207 equals the maximum pad voltage, the capacitor element can be decided to be positioned at the wider end of the positioning pad. A lower response voltage implies that the capacitor element is located somewhere between the wider and the narrower ends of the positioning pad, in accordance with the prevailing design of the capacitive positioning pad design. The minimum and maximum pad voltages can be determined empirically by moving the movable contact block, which carries the capacitor element 203b, to the respective ends and sending calibrating voltage pulses. Alternatively, said voltages are determines theoretically.

An advantage of the present capacitor array 205b is that due to the tapering form of the capacitive positioning pads E1, E2, F1, F2, few pads are needed. Thus, manufacture is simplified. Fewer separate connections of the voltage distribution means of the control device are needed. Each pad extends along the entire distance along which the movable contact block operates. In its simplest form, only one pad E1 is put to use. By the use of two pads, tapering in opposed directions, knowledge of the minimum and maximum pad voltages is not necessary. The relationship of the two response voltages alone conveniently suffice for determining the position of the capacitor element 203b. The use of a greater number of capacitive positioning pad pairs, in which the respective pads taper in opposed directions, improves the accuracy of the positioning.

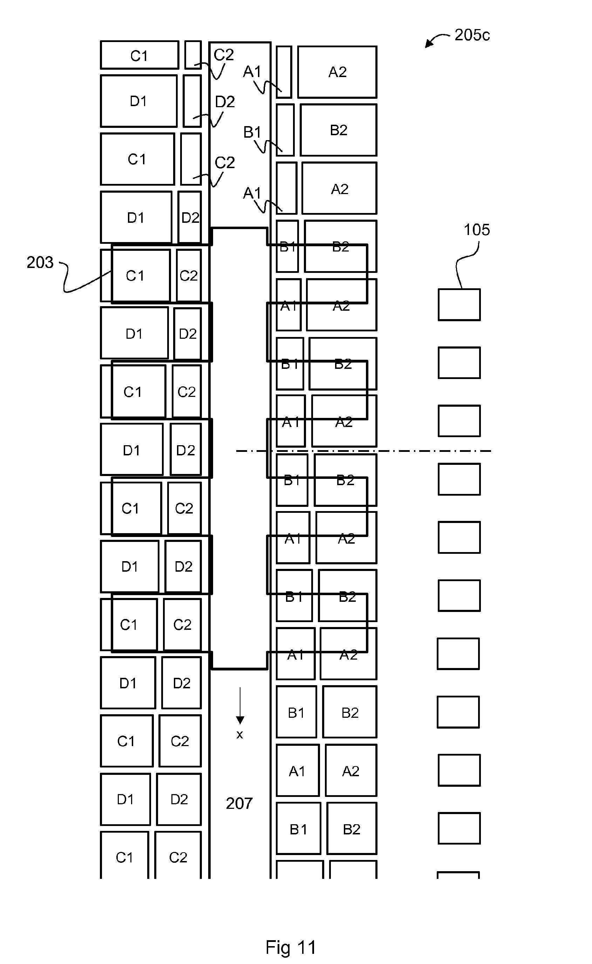

Figure 11 shows yet another conceivable configuration for the capacitor array 205c. For understanding of the working principle of this capacitor array 205c, reference is made to the description of the principle disclosed in figures 3-7 as well as the previous arrays 205a, 205b.

The capacitor array 205c of figure 11 combines the advantages of the previous arrays 205a, 205b. The high accuracy of the array 205a disclosed in figure 9, comprising both coarse positioning pads 1, 2, 3 ... and fine positioning pads A, B, C, D is combined with the convenient tapering positioning pads E1, E2, F1, F2 of the array 205b of figure 10. The array 205c of figure 11 can easiest be described as a partitioned version of the array 205b of figure 10. The array 205c comprises groups of inner pads A1, B1 and C2, D2 and outer pads A2, B2 and C1, D1. The pads C1, C2, D1, D2 on the left hand side of the pick-up rail 207 are offset (x-direction) in relation to the pads A1, A2, B1, B2 on the right hand side of the pick-up rail 207. The tapering form of the capacitive positioning pads A1, B1, C2, D2, A2, B2, C1, D1 entails that individual connection to the voltage distribution means 705 of the control device is not necessary.

For high accuracy, a capacitor element 203 with several fingers can be used for cooperation with the capacitor array 205c of figure 11. Said element 203 can however take other forms, as has been discussed with reference to figures 4-6.

The capacitor array 205c differs from the array 205a described with reference to figure 9 in that the sizes of the pads within the respective group vary along the pick-up rail 207. The capacitor pad groups are wedge-shaped. In this way, the inner and outer groups of positioning pads of figure 11 can be used for both absolute/coarse and relative/fine positioning.

In figure 11, on the right hand side of the capacitor array 205c, a number of contact pads 105 are shown for illustrative purposes (compare figures 4-6). It is thereby demonstrated that the position of the capacitor element 203 determines which one of the contact pads 105 that is contacted. As has been described with reference to figure 1, the contact pads 105 are actually positioned on the first PCB 105, which is arranged in parallel with the second PCB 113, on which the capacitor array 205c is positioned.

Bearing the working principle of the array 205b of figure 10 in mind, it is to be appreciated that by means of the varying widths of the capacitive positioning pads A1, B1, C2, D2, A2, B2, C1, D1 of figure 11, the coarse position of the capacitor element 203 can be determined. All pads are intermittently provided with voltage pulses. The control device 701 measures the voltage response via the pick-up rail 207, as has been described with reference to figure 7.

In operation, the position of the capacitor element 203 is first coarsely determined. This is carried out by activating, i.e. sending voltage pulses to, the capacitive positioning pads so that tapering capacitive surfaces are created, compare figure 10. Thus, in a first step, the outer pads C1, D1, A2, B2 can be activated. Subsequently, in a second step, the inner pads C2, D2, A1, B1 are activated. By comparing the voltage responses, the capacitor element 203 position can be coarsely determined. This means that the control device 701 is informed of the approximate location of the capacitor element 203. The control device 701 now knows which one of the contact pads 105 that presently may be contacted. Next, a process like the one described with reference to figure 5 is carried out in order to finely determine the position of the capacitor element 203, i.e. if the contact pads 105 are contacted or not. In this step, the respective pads on the left and right hand side of the pick-up rail are activated in sequence. One such sequence may read: C1+C2 → A1+A2 → D1+D2 → B1+B2. Again, reference is made to the description on figure 5. As is appreciated by a comparison of figure 5 and figure 11, the positioning pads A1, A2, B1, B2 are suitable for the position detection of the contact element 203 in the clearances between the contact pads 105.

All capacitive positioning pads of the capacitor array 205c shown in figure 11 work as both coarse positioning pads and fine positioning pads.

In the capacitive arrays 205a, 205c that use discrete capacitive positioning pads along the pick-up rail, it is desirable to design the arrays and the capacitor element in a manner such that overlapping capacitive contact areas are at hand all along the pick-up rail. In an overlapping capacitive contact area, a capacitor element is in capacitive contact with at least two positioning pads that are alternatively provided with electrical stimulation. In figures 9 and 11, this has been achieved by the offset design of the positioning pads with respect to each other. However, as is especially clear from a study of figure 11, the offset design may instead be incorporated in the capacitor element 203. This is realized by arranging the capacitor element fingers 903 on one side offset with respect to the fingers 903 on the other side. The offset arrangement shall preferably be equal to half the positioning pad pitch. If this design of the capacitor element is chosen, the capacitor array 205c shall be symmetrical, i.e. the capacitor array 205c shall not be designed with an offset between the positioning pads A1+A2 versus C1+C2. By correspondingly designing capacitor elements of other shapes, offset overlapping capacitive contact areas can be achieved with symmetrical capacitive arrays.

The capacitor elements 203, 203b of all examples are preferably somewhat narrower than the capacitor array portion that the respective capacitor element 203, 203b cooperates with, this is shown in figures 9-11. This reduces the risk for undesired interaction with adjacent capacitor elements 203, 203b.

As is shown in figures 8 and 9, the capacitor array 205a comprises several pick-up rails arranged side by side. This also applies to the arrays 205b, 205c of figures 10 and 11. All capacitor arrays 205a, 205b, 205c allow for some displacement of the capacitor element 203, 203b in the direction perpendicular to the pick-up rail 207. This is easiest explained with reference to figure 9. In figure 9, the fingers 903 of the capacitor element 203 overlap less than half of the width of the outer capacitive positioning pads C, D. This is due to the fact that a neighboring capacitor element 203 is arranged next to the capacitor element 203 of figure 9, and the pads C, D in question communicate with the two neighboring capacitor elements 203, see figure 8. Now, if the capacitor element 203 is displaced sideways, i.e. perpendicular to the pick-up rail 207, the overlapping area of the fingers 903 and the pads C, D on one side would decrease. The decrease would however be equivalent to a corresponding increase of the overlapping area of the fingers 903 and the pads C, D on the opposite side of the capacitor element 203. Since all C and D pads are activated collectively, the sideways displacement of the capacitor element does not affect the positioning. In this connection, it is desirable to design the main rectangle 901 of the capacitor element 203 somewhat narrower than the pick-up rail 207, so that the main rectangle 901 does not come to overlap any of the capacitive positioning pads upon sideways displacement.

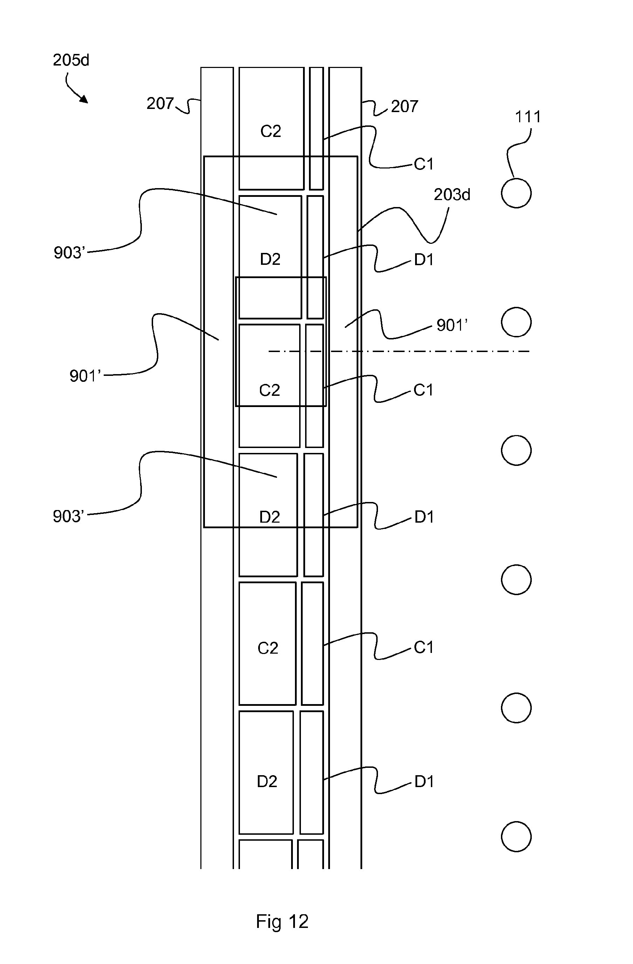

Figure 12 shows a capacitor array 205d that is especially suited for the second capacitor array 205', see figure 1. Said array 205d may however also be used for positioning of the contact blocks 109. For understanding of the working principle of the capacitor array 205d, reference is made to the description of the principle disclosed in figures 3-7 as well as the previous arrays 205a, 205b, 205c.

Basically, the capacitor array 205d of figure 12 corresponds to the capacitor array 205c of figure 11. However, the pick-up rail 207 has been duplicated and placed on both sides of only one set of capacitive positioning pads C1, C2, D1, D2.

The capacitor element 203d (203' in figure 1) of figure 12, which is carried by the drive means 115, comprises two capacitive rectangles 903' which correspond to the fingers 903 of the previous capacitor element 203. As is shown, the length, along the positioning direction, of the capacitive rectangles 903' essentially correspond to the length of the capacitive positioning pads C1, C2, D1, D2. The capacitor element 203d of figure 12 further comprises two longitudinal rectangles which correspond to the main rectangle 901 of the previous capacitor element 203. Again, this design of the capacitor element 203d is merely exemplary. For better accuracy, the capacitor element 203d may be extended to include more than two capacitive rectangles 903'. A solitary rectangle 903' could also be used (compare figures 5 and 10).

Since only one set of set of capacitive positioning pads C1, C2, D1, D2 is used, the accuracy of the capacitive positioning is lower that that of figures 5, 9 and 11. As has already been mentioned, overlapping and alternating capacitive positioning pads (see figures 5, 9 and 11) are needed for highly accurate positioning all along the positioning length. However, since the capacitor array 205d of figure 12 is especially designed for the positioning of the drive means 115, accurate positioning all along the positioning length is not needed. It is sufficient to be able to position the drive means 115 at the respective positioning screw 111. By way of example, six positioning screws 111 are illustratively indicated in figure 12. Bearing the principle of the straight voltage response curve slopes (discussed with reference to figure 4) in mind, it is to be appreciated that the capacitor array 205d of figure 12 can be used for accurate positioning of the drive means 115 at a respective positioning screw 111.

The operation of the position detection of the drive means is similar to the one described with reference to figure 11. The position of the capacitor element 203d is first coarsely determined by simultaneously activating all the C1 and D1 pads, and thereafter all the C2 and D2 pads. The thereby created two contra-directed tapering capacitive patterns (compare E1 and E2 in figure 10) generate two different voltage responses which are used to coarsely determine the position of the capacitor element 203d. Subsequently, the position is finely determined by alternately activating the C1+C2 pads and the D1+D2 pads as has been described with reference to figure 4.

Generally, a higher taper angle of wedge-shaped capacitive positioning pads results in better positioning accuracy, but requires a larger area for the capacitor array 205b, 205c and 205d. A taper angle of 2-3° is preferred as a reasonable compromise between accuracy and space requirement, although angles of 1 to 10° are conceivable for the current application.

An advantage of all respective capacitor arrays 205 described is that they allow instant determination of the location of the contact block 109, without need to move the contact block 109. The present design of the capacitor arrays (with exception for the single tapering pad example) allows positioning without knowledge of the expected minimum and maximum response voltages. The fact that is the ratio of response voltages that is used for the positioning further entails that the positioning is very accurate even is the distance between the capacitor element 203 and the capacitor array 205 should vary. Such variation may result from slightly curved printed circuit boards 107, 113. Furthermore, a variation of the distance can result from foreign particles such as dust, deposited on the array.

The capacitor array 205 is arranged in fixed relation to the contact pads 105. The contact block 109 carries the capacitor element 203 and the contact springs 201. Hereby, knowledge of the position of a capacitor element 203 with respect to the capacitor array results in knowledge of the position of the contact springs 201 with respect to the contact pads 105. In the present examples, the contact pads 105 are arranged on a first PCB 107 and the capacitor array is arranged on a second PCB 113. Thus, the first PCB 107 must be arranged in fixed relation to the second PCB 113.

The capacitor element 203, 203', 203b, 203d can be manufactured from any suitable electrically conducting material. A cost-effective capacitor element may be punched out from a sheet of steel. Conductive plastic is another alternative. The capacitor element can also be integrated as a conducting layer in a contact block 109 or a drive means 115.

After manufacture, before the switch matrix board 100 is installed in a telephone exchange, the switch matrix board 100 can be calibrated for optimal positioning performance. Such calibration is performed by supplying a test signal to the respective contact pads 105 while the contact block 109 is moved. The respective positions of the contact block 109, at which positions the contact springs 201 are connected to and disconnected from the contact pads 105, are then registered by the control device. In this way, any offset between the first and second PCBs 107, 113 can be compensated for, this has been described above with reference to figure 5a. The "offset information" is preferably stored in a power outage proof memory, since performing a new calibration after installation is relatively complex and thus undesired.

## Claims

1. A cross-connect device (100) for electrically cross-connecting any line in a set of input lines (101) to any line in a set of output lines (103), which device (100) comprises
a plurality of contact pads (105) to which input and output lines (101, 103) respectively are to be connected,
a linearly movable contact block (109) which is arranged to connect the contact pads (105) to each other for connecting an input line (101) to an output line (103), and
drive means (115) for moving the contact block (109),
**characterised in that**
the device further comprises a capacitive positioning system with a capacitor element (203) which is carried by the contact block (109), and a capacitor array (205) which is arranged in fixed relation to the contact pads (105),
wherein the capacitor element (203) which is carried by the contact block (109) is arranged adjacent the capacitor array (205) so that the capacitive positioning system can determine the contact block (109) position in relation to the contact pads (105).

2. The device of claim 1, wherein a number of groups of contact pads, each group comprising a plurality of contact pads (105), are arranged side by side, and a corresponding number of contact blocks (109) with capacitor elements (203) are arranged side by side, the capacitive positioning system being adapted in correspondence therewith so that the capacitor array (205) extends over the area where the number of capacitor elements (203) move.

3. The device of claim 1 or 2, wherein the capacitive positioning system comprises a control device (701), which is adapted to apply electrical stimulation to the capacitor array (205), and to measure the corresponding response on the capacitor element (203).

4. The device of claim 3, wherein the electrical stimulation is a voltage pulse.

5. The device of any one of claims 1 to 4, wherein the capacitor array (205) comprises a number of capacitive positioning pads (211) and a pick-up rail (207), which are arranged along the contact pads (105), the capacitor element (203) cooperating with the capacitive positioning pads and the pick-up rail (207) so that electrical stimulation can be forwarded from the capacitive positioning pads (A, B ...), through the capacitor element (203) and to the pick-up rail (207).

6. The device of claim 5, further comprising electrical lines which connect the capacitive positioning pads to a control device (701), such that the capacitive positioning pads can function as coarse position capacitive positioning pads for determining a coarse position of the contact block (109), which coarse position capacitive positioning pads are linearly distributed at even intervals along the pick-up rail (207).

7. The device of claim 6, wherein the capacitive positioning pads are of equal width, as measured essentially perpendicularly to the pick-up rail (207), and are individually connected to a control device (701) by means of the electrical lines.

8. The device of claim 6, wherein the width, as measured essentially perpendicularly to the pick-up rail (207), of the capacitive positioning pads differ along the pick-up rail (207), wherein the capacitive positioning pads are divided into a first coarse positioning group (A2, B2, C1, D1) and a second coarse positioning group (A1, B1, C2, D2), the pads within each group being connected to the control device (701) such that the groups can be electrically stimulated independently from each other.

9. The device of claim 6, 7 or 8, wherein the capacitive positioning pads are connected to the control device (701), such that the capacitive positioning pads additionally can function as fine position capacitive positioning pads for determining a fine position of the contact block (109), wherein the capacitive positioning pads are divided into four fine positioning groups, the pads within each group being connected to the control device (701) such that the groups can be electrically stimulated independently from each other, wherein the positioning pads of one group are arranged so as to alternate with the positioning pads of another group, and the positioning pads communicate with the capacitor element (203) in a manner such that offset overlapping capacitive contact areas are at hand all along the pick-up rail.

10. A cross-connect device (100) for electrically cross-connecting any line in a set of input lines (101) to any line in a set of output lines (103), which device (100) comprises
a plurality of linearly movable contact blocks (109) which are arranged to connect an input line (101) to an output line (103),
a linearly movable drive means (115) for moving the contact blocks (109), wherein the drive means (115) can be moved to a position adjacent a respective contact block (109) and move the respective contact block (109),
**characterised in that**
the device further comprises a capacitive positioning system with a capacitor element (203') which is carried by the drive means (115), and a capacitor array (205') which is arranged in fixed relation to the contact blocks (109),
wherein the capacitor element (203') is arranged adjacent the capacitor array (205') so that the capacitive positioning system can determine drive means (115) position in relation to the contact blocks (109).
